(19) Europäisches Patentamt
European Patent Office
Office européen des brevets

(11) **EP 3 513 900 A1**

(12) **EUROPEAN PATENT APPLICATION**
published in accordance with Art. 153(4) EPC

(43) Date of publication:
**24.07.2019 Bulletin 2019/30**

(21) Application number: **18857692.0**

(22) Date of filing: **07.06.2018**

(51) Int Cl.:
***B23K 35/26*** *(2006.01)*   ***B23K 35/14*** *(2006.01)*
***C22C 13/00*** *(2006.01)*   ***C22C 13/02*** *(2006.01)*

(86) International application number:
**PCT/JP2018/021812**

(87) International publication number:
**WO 2019/058650 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2017  JP 2017180660**

(71) Applicant: **Senju Metal Industry Co., Ltd Tokyo 120-8555 (JP)**

(72) Inventors:
• **KAMEDA Naoto**
  Tokyo 120-8555 (JP)
• **MUNEKATA Osamu**
  Tokyo 120-8555 (JP)
• **TSURUTA Kaichi**
  Tokyo 120-8555 (JP)
• **SATO Isamu**
  Tokyo 120-8555 (JP)

(74) Representative: **Grünecker Patent- und Rechtsanwälte PartG mbB Leopoldstraße 4 80802 München (DE)**

(54) **SOLDER ALLOY FOR BONDING CU PIPES AND/OR FE PIPES, PREFORM SOLDER, RESIN FLUX CORED SOLDER, AND SOLDER JOINT**

(57)    Provided is a solder alloy, with which long term joining reliability of a metallic pipe can be ensured by preventing growth of an intermetallic compound layer at the joint interface during low-temperature joining of the metallic pipe. The solder of the present invention includes an alloy composition consisting of, in mass%: Sb: 5.0% to 15.0%; Cu: 0.5% to 8.0%; Ni: 0.025% to 0.7%; Co: 0.025% to 0.3%; and balance Sn.

FIG. 5

EP 3 513 900 A1

**Description**

Technical Field

The present invention relates to a solder alloy for preventing growth of intermetallic compounds, preform solder, flux-cored solder, and a solder joint.

Background Art

White goods such as an air conditioner and a refrigerator include a cooling device. The cooling device mainly includes a compressor, a condenser, an expansion valve, an evaporator, and pipes that supply a refrigerant to each device. As a cooling cycle generated by the cooling device, first, a gas refrigerant is compressed by the compressor, and the compressed high-temperature and high-pressure gas passes through the condenser and liquefies. The liquefied refrigerant passes through the expansion valve, and a boiling point thereof decreases due to a sudden drop in pressure. Then, the liquefied refrigerant is vaporized by the evaporator. Finally, the vaporized refrigerant is compressed again by the compressor, and the cycle is repeated. The temperature in the surroundings decreases by endotherm during vaporization of the liquefied refrigerant by the evaporator.

Machines constituting the above-described cooling device are disposed in the white goods after the machines are connected with the pipe that supplies a refrigerant. As described in Patent Document 1, for example, a method of connecting by brazing is adopted as a connection method of pipes. Patent Document 1 describes that brazed parts are reduced since reliability may be reduced due to leakage of the refrigerant if the number of the brazed parts is large.

However, a skill of a brazing worker is necessary in pipe joining by brazing, and the quality of the joint portion depends on skill level of the worker. Due to differences in skill level, a pipe temperature may be excessively high when a pipe is heated, causing the pipe to deform, or a void may be generated in a brazing material, and refrigerant leakage defects may occur. In addition, the brazing material may not penetrate into the entire circumference of the pipe gap if the pipe temperature is too low, and thus the refrigerant leakage defects may occur. Further, the pipe is annealed in brazing, resulting in softening the pipe, which may cause deformation. In addition, the brazing potentially causes a fire during pipe joining since a high temperature and long heating time are required in the brazing.

Therefore, Patent Document 2 describes a lead-free solder alloy composition suitable for joining metallic pipe such as a Cu pipe or a brass pipe at a low temperature. The solder alloy described in Patent Document 2 contains 3 mass% to 5 mass% of Cu in order to widen a range of a solidus temperature and a liquidus temperature of a Sn-Sb-Cu solder alloy. Further, in the present invention described in Patent Document 2, by heating the solder alloy to a temperature slightly higher than the solidus temperature to cause a liquid phase and a solid phase to coexist, liquid flows into a part where a gap between a pipe and the other pipe is small, and solid is filled in a part having a large gap, thereby joining the pipes.

Prior Art Documents

Patent Documents

Patent Document 1: JP-A-S61-49974

Patent Document 2: JP-A-H02-34295

Summary of the Invention

Technical Problems

The solder alloy described in Patent Document 2 includes an alloy composition for soldering which can be performed at a low temperature, in order to solve the problems in the joining by brazing described in Patent Document 1. However, the solder alloy described in Patent Document 2 has a large amount of Cu, so that there is a concern over deposition of an intermetallic compound such as $Cu_6Sn_5$ (hereinafter, appropriately referred to as "InterMetallic Compound" (IMC)) and growth of an IMC layer when a solder joint that joins Cu pipes is formed. In addition, not only a Cu pipe but also a Fe pipe is used in a recent cooling device. Therefore, when the Cu pipe is joined with the Fe pipe, a refrigerant may leak out from a joint portion when the Cu pipe and the Fe pipe underwent a temperature cycle caused by circulation of the refrigerant, which may cause a failure.

In addition, Patent Document 2 also discloses that the solder alloy described herein contains Ni. It is common that $Cu_6Sn_5$ becomes $(CuNi)_6Sn_5$ when Ni is added to the solder alloy, so that rupture at a joint interface is prevented. However, when the Cu pipe and the Fe pipe undergo a temperature cycle caused by circulation of the refrigerant in the future, it is difficult to sufficiently prevent rupture at the joint interface when only Ni is added as described in Patent Document 2.

Recent white goods have a long service life due to improvement in performance. Accordingly, a pipe of the cooling device mounted on the white goods is exposed to a long-term temperature cycle. In order to prevent the refrigerant from leaking out of a pipe joint portion, it is required to prevent IMC growth in low-temperature joining of the pipes using the solder alloy.

An object of the present invention is to provide a solder alloy, preform solder, flux-cored solder, and a solder joint, with which joining reliability during joining of metallic pipe and long term joining reliability can be ensured by preventing growth of an intermetallic compound layer generated at the joint interface during low-temperature joining of the metallic pipes.

Solution to Problems

From the viewpoint of cost reduction, the present inventors used soldering instead of brazing in order to adopt a joining method using a pipe according to the related art rather than a pipe of a special material, and studied a solder alloy composition suitable for the soldering. Generally, in joining of metallic pipes, an end portion of one pipe is inserted into the other pipe, and on an outer periphery of the one pipe and an inner periphery of the other pipe, a portion where the two pipes face to each other and an area in vicinity thereof are heated by high-frequency heating or flame. Therefore, an IMC layer at a joint interface is likely to grow since heating conditions are varied and heating area and joining area are widely spread, compared with the case where a fine electrode part such as a semiconductor device is joined in an environment with controlled temperature and atmosphere.

In view of the pipe joining conditions as described above, the present inventors studied an element that prevents the growth of the IMC layer during pipe joining by using the Sn-Sb-Cu solder alloy described in Patent Document 2 as a basic composition. Here, although the metallic pipe of a cooling device used for white goods is usually a Cu pipe, a Fe pipe may be used as described above. Therefore, it is required to select an element that prevents growth of the IMC layer in joining with the Fe pipe. From the viewpoint of preventing diffusion of Fe into the solder alloy with respect to the Fe pipe, Fe, Co, and Ni are sometimes treated equivalently as elements that can be contained in the solder alloy. However, Fe is not preferable since Fe significantly increases a melting point of a solder alloy for a Sn-based solder alloy. Co and Ni also have high melting points. Therefore, it is considered that it is difficult to use these elements that are handled equivalently as described in the related art when pipe joining at a low temperature is performed.

As a result of further studies, the present inventors intentionally added Ni, which was commonly considered unsuitable for pipe joining at a low temperature and attempted to join a Fe pipe with a Cu pipe by using a Sn-Sb-Cu-Ni based solder alloy. As a result, the growth of the IMC layer could not be prevented by only adding Ni. However, the following findings were obtained: when pipes are joined, an increase in melting point falls in an allowable range as long as the Ni content is within a predetermined range.

Therefore, the following findings were obtained: an increase in melting point can be unexpectedly prevented and the IMC layer at the joint interface can be 1.5 times or more thinner than the solder alloy composition according to the related art to which Co is not added, when a predetermined amount of Co, which is avoided to be added like Ni, was further added to the alloy composition.

As a result of further detailed investigations, the following findings were obtained: the growth of the IMC layer is reduced when the content ratio of the Co content to the Ni content is within a predetermined range.

The present invention obtained based on these findings is as follows.

(1) A solder alloy for joining a Cu pipe and/or a Fe pipe, the solder alloy having an alloy composition consisting of, in mass%: Sb: 5.0% to 15.0%; Cu: 0.5% to 8.0%; Ni: 0.025% to 0.7%; and Co: 0.025% to 0.3%, with the balance being Sn,

wherein the alloy composition satisfies the following relationship (1):

$$0.07 \leq Co/Ni \leq 6 \quad (1)$$

wherein Co and Ni are respectively represent contents (mass%) of Co and Ni.

(2) The solder alloy for joining a Cu pipe and/or a Fe pipe according to (1), wherein the alloy composition further comprises, in mass%, Sb: 5.0% to 9.0%.

(3) The solder alloy for joining a Cu pipe and/or a Fe pipe according to (1) or (2), wherein the alloy composition further comprises, in mass%, Cu: 0.5% to 3.0%.

(4) The solder alloy for joining a Cu pipe and/or a Fe pipe according to any one of (1) to (3), wherein the alloy composition further comprises, in mass%, Ni: 0.025% to 0.1%.

(5) The solder alloy for joining a Cu pipe and/or a Fe pipe according to any one of (1) to (4), which has a liquidus temperature of 450°C or lower.

(6) A preform solder comprising the solder alloy for joining a Cu pipe and/or a Fe pipe according to any one of (1) to (5).

(7) A flux-cored solder comprising the solder alloy for joining a Cu pipe and/or a Fe pipe according to any one of (1) to (5).

(8) A solder joint comprising the solder alloy for joining a Cu pipe and/or a Fe pipe according to any one of (1) to (5).

Brief Description of the Drawing

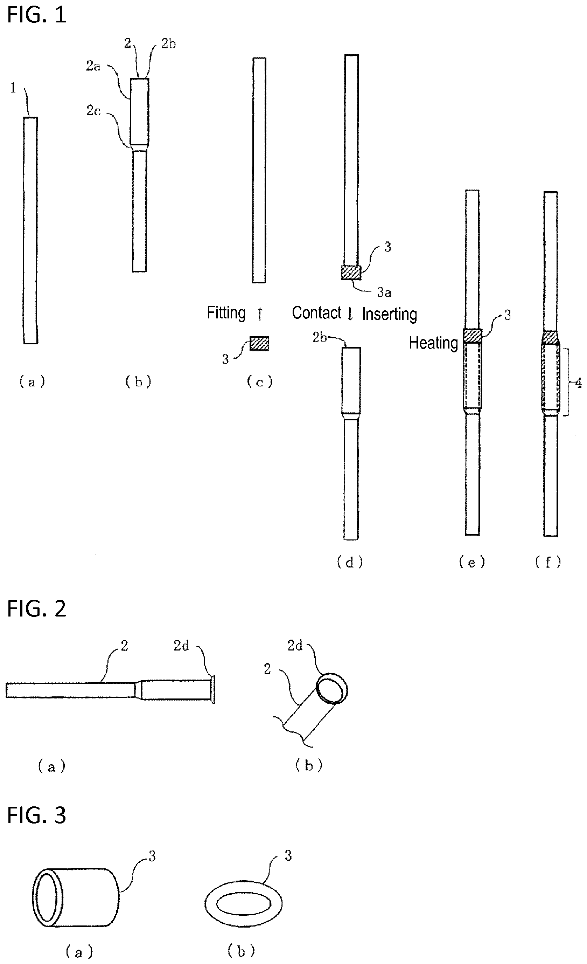

Fig. 1 shows the joining method of pipes. Fig. 1(a) is a side view of a first pipe. Fig. 1(b) is a side view of a second pipe including an enlarged pipe portion. Fig. 1(c) shows a step of fitting preform solder to the first pipe. Fig. 1(d) shows a step of inserting the first pipe into the second pipe and bringing the preform solder into contact with an end surface of the enlarged pipe portion. Fig. 1(e) shows a step of heating the preform solder. Fig. 1(f) is a partial perspective view showing a state in which the preform solder is heated so that the solder flows into the gap between the first pipe and the second pipe and the two pipes are joined so as to form a joint portion.

Fig. 2 shows a first pipe having a flare-processed portion at an end portion. Fig. 2(a) is a side view of the first pipe. Fig. 2(b) is a partial perspective view of a vicinity of the end portion.

Fig. 3 is a perspective view of preform solder. Fig. 3(a) shows a hollow cylindrical preform solder. Fig. 3(b) shows a ring-shaped preform solder.

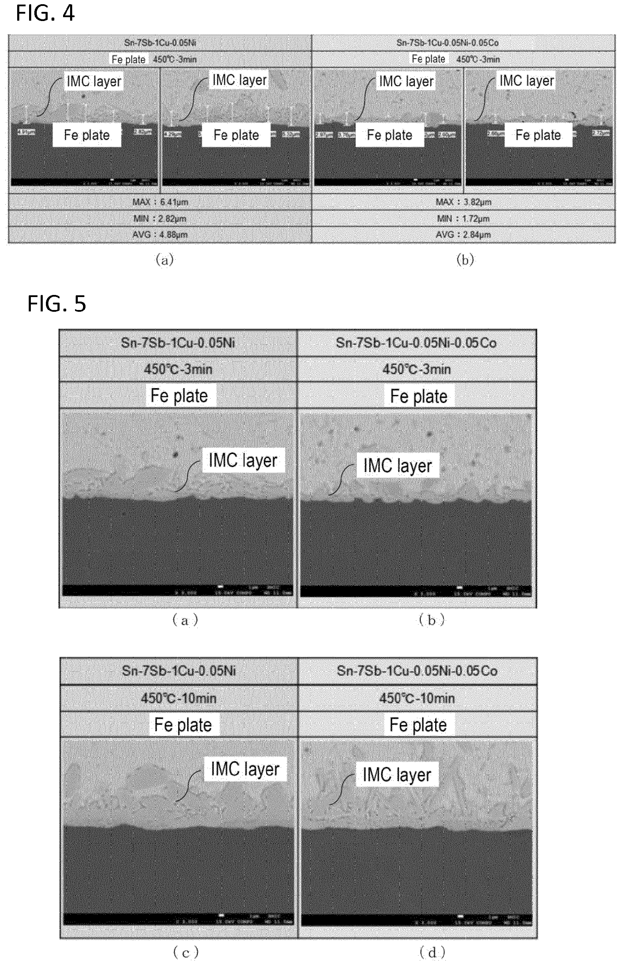

Fig. 4 is SEM photographs of cross sections of joint surfaces obtained by using alloys in Comparative Example 3 and Example 5 to join with Fe plates under a heating condition of 450°C-three min (being maintained at 450°C for three minutes). Fig. 4(a) is a SEM photograph showing the result of arbitrarily extracted two joint surfaces using the alloy in Comparative Example 3 and measuring a film thickness of the IMC layer formed in each of cross sections at five points. Fig. 4(b) is a SEM photograph showing the result of arbitrarily extracted two joint surfaces using the alloy in Example 5 and measuring a film thickness of the IMC layer formed in each of cross sections at five points.

Fig. 5 is SEM photographs of cross sections of joint surfaces obtained by using alloys in Comparative Example 3 and Example 5 to join with Fe plates under heating conditions of 450°C-three min and 450°C-ten min. Fig. 5(a) is a SEM photograph showing a cross section of a joint surface obtained by using the alloy in Comparative Example 3 to join with a Fe plate under a heating condition of 450°C-three min. Fig. 5(b) is a SEM photograph showing a cross section of a joint surface obtained by using the alloy in Example 5 to join with a Fe plate under a heating condition of 450°C-three min. Fig. 5(c) is a SEM photograph showing a cross section of a joint surface obtained by using the alloy in Comparative Example 3 to join with a Fe plate under a heating condition of 450°C-ten min. Fig. 5(d) is a SEM photograph showing a cross section of a joint surface obtained by using the alloy in Example 5 to join with a Fe plate under a heating condition of 450°C-ten min.

Description of Embodiments

The present invention is described in detail below. In this description, "%" with respect to a solder alloy composition is "mass%", unless otherwise specified.

1. Alloy Composition

(1) Sb: 5.0% to 15.0%

Sb is an element necessary for improving strength of a solder alloy. In addition, Sb is an element that improves temperature cycle properties or fatigue resistance properties.

When the Sb content is less than 5.0%, the above-described effects cannot be sufficiently obtained. As the lower limit of the Sb content, it is 5.0% or more, preferably 6.0% or more, more preferably 6.5% or more, and particularly preferably 7.0% or more. On the other hand, when the Sb content is more than 15.0%, the liquidus temperature is likely to exceed 450°C. Accordingly, workability of soldering is reduced. In addition, the solder alloy becomes hard and a SnSb intermetallic compound is coarsened. As a result, there is a risk that distortion concentrates at a grain boundary, and the solder alloy is ruptured from the grain boundary. As the upper limit of the Sb content, it is 15.0% or less, preferably 14.0% or less, more preferably 13.0% or less, still more preferably 12.0% or less, and particularly preferably 11.0%. In addition, as the upper limit of the Sb content, it is most preferably 9.0% or less, from the viewpoint of improving the wet spreading property and facilitating flow of solder into the gap between pipes.

(2) Cu: 0.5% to 8.0%

Cu is an element necessary for improving joining strength of a solder joint. When Cu is less than 0.5%, neither the strength nor a temperature cycle property is improved. As the lower limit of the Cu content, it is 0.5% or more, preferably 0.6% or more, more preferably 0.8% or more, and particularly preferably 1.0% or more. On the other hand, when the Cu content is more than 8.0%, the liquidus temperature exceeds 450°C. Accordingly, workability of soldering is reduced. As the upper limit of the Cu content, it is 8.0% or less, preferably 6.0% or less, more preferably 5.0% or less, and still more preferably 4.0% or less. In addition, the Cu content is particularly preferably 3.0% or less, from the viewpoint of improving the wet spreading property and facilitating flow of solder into the gap between pipes.

(3) Ni: 0.025% to 0.7%

Ni is an element necessary for preventing rapture at a joint interface between a metallic pipe and the solder alloy by uniformly dispersing in $Cu_6Sn_5$.
In addition, Ni is added together with Co to prevent growth of the IMC layer and to form a uniform and fine IMC layer. When the Ni content is less than 0.025%, the effects of preventing the growth of the IMC layer cannot be sufficiently obtained when Ni is added simultaneously with Co. As the lower limit of the Ni content, it is 0.025% or more, preferably 0.035% or more, and particularly preferably 0.05% or more. On the other hand, when the Ni content is more than 0.7%, the liquidus temperature exceeds 450°C. Accordingly, workability of soldering is reduced. As the upper limit of the Ni content, it is 0.7% or less, preferably 0.6% or less, more preferably 0.5% or less, and still more preferably 0.4% or less.
Further, as the upper limit of the Ni content, it is particularly preferably 0.1% or less, and most preferably 0.07% or less, from the viewpoint of facilitating flow of solder into the gap between pipes.

(4) Co: 0.025% to 0.3%

Co is added together with Ni to prevent the growth of the IMC layer and to form a uniform and fine IMC layer. Co contributes to miniaturization of alloy structure since Co is generated as a large number of solidification nuclei during solidification of the solder alloy and a Sn phase is deposited around the solidification nuclei. Accordingly, the IMC layer at the joint interface can be thinner, and the growth of the IMC layer can be prevented. Further, growth of crystal grains and the growth of the IMC layer are prevented since Ni is uniformly present in $Cu_6Sn_5$.
When the Co content is less than 0.025%, such effects cannot be obtained. As the lower limit of the Co content, it is 0.025% or more, preferably 0.035% or more, and particularly preferably 0.050% or more. On the other hand, when the Co content is more than 0.3%, the liquidus temperature exceeds 450°C. Accordingly, workability of soldering is reduced. As the upper limit of the Co content, it is 0.3% or less, preferably 0.2% or less, more preferably 0.1% or less, and particularly preferably 0.07% or less.

(5) Ratio of Co to Ni

The content ratio of Co to Ni in the present invention satisfies the following relationship (1).

$$0.07 \leq Co/Ni \leq 6 \qquad (1)$$

In the relationship (1), "Co" and "Ni" represent contents (mass %) of Co and Ni, respectively.
Co and Ni exert effects particularly when the Cu pipe and the Fe pipe are joined. The two elements prevent diffusion of Fe into the solder alloy. As a result, a brittle intermetallic compound such as FeSn and $FeSn_2$ can be prevented from generating. In addition, Ni is uniformly dispersed in $Cu_6Sn_5$ formed at the joint interface to prevent rapture at the joint interface with the Cu pipe, and Co prevents the growth of the IMC layer, as described above. Therefore, the two elements are closely related in the solder alloy of the present invention. That is, in the present invention, it is assumed that the intermetallic compound becomes finer by adding Co with the addition of Ni by which the structure of the intermetallic compound is homogenized.
In order to obtain such effects, Co/Ni, which is the content ratio between the two elements, preferably satisfy the relationship (1). As the lower limit of Co/Ni, it is 0.07 or more, and more preferably 0.09 or more. As the upper limit of Co/Ni, it is 6 or less, more preferably 4 or less, still more preferably 2 or less, and particularly preferably 1 or less.

3. Preform Solder

A preform solder according to the present invention may be used in the form of a ring shape, a cylindrical shape, a shape in which wire solder is wound in three turns or less, and the like. Details are described below with reference to Fig. 3.

4. Flux-Cored Solder

The solder alloy according to the present invention is suitably used for flux-cored solder in which flux is contained in advance. In addition, the solder alloy may also be used in the form of wire solder, from the viewpoint of supplying solder to soldering iron. Further, the solder alloy may also be suitably used for flux-cored wire solder in which flux is sealed in wire solder. A surface of each solder may be covered with flux. In addition to this, a surface of solder in which flux is not contained may be covered with flux.

The flux content in the solder is, for example, 1 mass% to 10 mass%, and the rosin content in the flux is 70% to 95%. Generally, rosin is an organic compound and contains carbon and oxygen, so that terminal functional groups and the like in the rosin in the present invention is not limited.

5. Solder Joint

The solder joint according to the present invention is suitable for connection between metallic pipes. Solder plating may be applied to the metallic pipe. Here, "solder joint" is referred to as a connection portion of a pipe.

6. Joining Method of Pipes

In the joining method of pipes using the solder alloy according to the present invention, for example, a first pipe is joined with a second pipe that includes, at an end portion, an enlarged pipe portion having an inner diameter larger than an outer diameter of the first pipe.

The method includes three steps as follows: a step of fitting preform solder to the first pipe; a step of inserting the first pipe fitted with the preform solder into the enlarged pipe portion of the second pipe and bringing the preform solder into contact with an end surface of the enlarged pipe portion; and a step of heating the preform solder.

Hereinafter, the method is described in detail with reference to the drawings.

Fig. 1 shows the joining method of pipes. Fig. 1(a) is a side view of a first pipe 1. Fig. 1(b) is a side view of a second pipe 2 including an enlarged pipe portion 2a. Fig. 1(c) shows a step of fitting preform solder 3 to the first pipe 1. Fig. 1(d) shows a step of inserting the first pipe 1 into the second pipe 2 and bringing the preform solder 3 into contact with an end surface 2b of the enlarged pipe portion 2a. Fig. 1(e) shows a step of heating the preform solder 3. Fig. 1(f) is a partial perspective view showing a state in which the preform solder 3 is heated so that the solder flows into the gap between the first pipe 1 and the second pipe 2 and the two pipes are joined so as to form a joint portion 4.

(1) Pipes

The pipes used in the present invention, as shown in Figs. 1(a) and 1(b), may have linear shapes, or may be bent at predetermined angles. The first pipe 1 shown in Fig. 1(a) is an ordinary pipe whose end portion is not processed specially. As shown in Fig. 1(b), the second pipe 2 includes the enlarged pipe portion 2a on at least one end portion thereof. An inner diameter of the enlarged pipe portion 2a is larger than an outer diameter of the first pipe 1, so that the end portion of the first pipe 1 can be inserted into the enlarged pipe portion 2a. A difference between the outer diameter of the first pipe 1 and the inner diameter of the enlarged pipe portion 2a may be about 2 mm such that the gap therebetween can be filled with solder.

In the second pipe 2, outer diameters of portions other than the enlarged pipe portion 2a are preferably equal to or less than the outer diameter of the first pipe 1, and are more preferably equal to the outer diameter of the first pipe 1. When the outer diameters of portions other than the enlarged pipe portion 2a are equal to or less than the outer diameter of the first pipe 1, the end portion of the first pipe 1 contacts a diameter-reduced portion 2c of the enlarged pipe portion 2a, and a inserted length of the first pipe 1 into the enlarged pipe portion 2a becomes constant, which facilitates the operation, when the first pipe 1 is inserted into the expanded pipe portion 2a. In addition, materials of the two pipes are not particularly limited, and may be, for example, a Cu pipe or a Fe pipe containing Fe as a main component. Solder plating may be applied to these pipes.

In addition, it is necessary to use thick wire solder in order to increase the amount of solder when a ring-shaped preform solder 3 described below is used. However, this may cause overflow of molten solder. The ring-shaped preform solder 3 has a substantially circular cross section in order to form wire solder in an annular shape, and has small contact area with the end surface 2b of the enlarged pipe portion 2a. Therefore, the molten solder may be difficult to flow into the gap between the enlarged pipe portion 2a and the first pipe 1. From these viewpoints, as shown in Fig. 2, it is desired that the end portion of the enlarged pipe portion 2a includes a flare-processed portion 2d when the ring-shaped preform solder 3 is used. The ring-shaped preform solder 3 is formed by wire solder whose substantially circular cross section has a diameter larger than one side thickness of the enlarged pipe portion 2a. The molten solder is prevented from overflowing to an outer periphery of the enlarged pipe portion 2a and is easy to flow into the gap between the enlarged pipe portion 2a and the first pipe 1 by providing the flare-processed portion 2d. The width of one side of the flare-processed portion 2d may be appropriately adjusted depending on a cross-sectional diameter of the ring-shaped preform solder 3 so that the molten solder does not overflow to the outer periphery of the enlarged pipe portion 2a.

In order to prevent the molten solder from overflowing when the ring-shaped preform solder 3 is used, it is desired that the flare-processed portion 2d has a funnel shape in a longitudinal section of the second pipe 2. The enlarged pipe portion 2a also has a funnel shape in a longitudinal section of the second pipe 2.

The flux may be applied to an outer peripheral surface of the end portion of the first pipe 1 and/or an inner peripheral surface of the enlarged pipe portion 2a of the second pipe 2, when the preform solder 3 is not flux-cored solder. In addition, the flux may be dropped to the preform solder 3 after the first pipe 1 is inserted into the second pipe 2.

A joining method of pipes using these pipes is described in detail below.

(2) Step of fitting preform solder to first pipe

In this joining method, first, the preform solder 3 is fitted to the end portion of the first pipe 1 as shown in Fig. 1(c). The preform solder 3 has a certain size and shape, so that a predetermined amount of solder can be supplied in a low-temperature region without requiring skill unlike the case of joining using a brazing material.

Variations in temperature can be reduced when solder having a melting point lower than the brazing metal is used as a joined body. The brazing material is generally heated to a high temperature of 1000°C to melt by using a burner in joining of the brazing material. Accordingly, a variation of about 900°C to 1100°C occurs depending on the skill level, and a difference in quality of the joint portion may occur. On the other hand, the solder may be heated to about 300°C to 450°C, and a temperature error of 200°C is unlikely to occur like the case of the brazing material even when the skill level is low. When such a temperature error occurs during soldering, it is difficult to perform soldering.

It is difficult to control the temperature in a short time since brazing is generally performed using a burner even though heating temperature is controlled using a thermometer. Even though the brazing material is heated by a high-frequency induction heating device, it is required to provide a large power supply device and a large cooling mechanism for cooling a coil in order to heat the brazing material to a high temperature of 1000°C, resulting in poor workability. Even through a low temperature brazing material is required to be heated to 500°C or higher, the above problem is not solved. Further, joining using a brazing material causes a rise in cost due to a necessity of high-temperature heating.

On the other hand, the preform solder 3 having a low melting point and a predetermined size is used in the joining method. Accordingly, the supply amount of the solder is constant, and variation in heating temperature is small. Therefore, the workability is good since no skill degree like the joining by brazing is required.

It is desired that a shape of the preform solder 3 used in the present invention is a hollow cylindrical shape, as shown in Fig. 3(a). When the hollow cylindrical shape is used, the preform solder 3 is only necessary to be lengthened when the amount of solder is desired to be increased. In addition, the hollow cylindrical shaped preform solder 3 can be formed simply by rolling wire solder, cutting the wire solder to a predetermined length and then forming an annular shape, which leads to cost reduction.

In the case of the hollow cylindrical shape shown in Fig. 3(a), it is desired that the longitudinal section of the preform solder 3 is substantially rectangular. In this case, the end surface 2b of the enlarged pipe portion 2a is brought into surface-contact with an end surface 3a of the preform solder 3. Accordingly, contact area thereof is increased, and the molten solder easily flows into the gap between the enlarged pipe portion 2a and the first pipe 1, so that a quality of a joint portion 4 shown in Fig. 1(f) is stabilized. When the preform solder 3 has the shape shown in Fig. 3(a), it is desired that an outer diameter of the preform solder 3 is substantially equal to an outer diameter of the enlarged pipe portion 2a. In this case, the molten solder does not overflow to the outer periphery of the enlarged pipe portion 2a.

In addition, the preform solder 3 may be a ring shape as shown in Fig. 3(b). It is only necessary to form the wire solder into the annular shape after the wire solder is cut to the predetermined length, and thus the process is easy and the cost can be reduced. In the case of the ring shape, an outer diameter of the ring may be increased while an inner diameter thereof is maintained, in order to increase the amount of solder. Alternatively, a solder material obtained by spirally winding wire solder with a winding number of 3 or less may be used. The winding number is appropriately adjusted to 2.5 or 2 depending on contact area of the first pipe 1 and the second pipe 2 when the wire solder is wound. When ring-shaped preform solder 3 is used, it is desired that the second pipe 2 in which the flare-processed portion 2d is provided as shown in Fig. 2, depending on the diameter of the cross section of the preform solder 3, is used.

In addition, it is desired that an inner diameter of the preform solder 3 is substantially equal to the outer diameter of the first pipe 1. In the present invention, it is desired to use own weight of the solder to pour the molten solder into the gap between the enlarged pipe portion 2a and the first pipe 1 when the preform solder 3 is heated. Therefore, as shown in Fig. 1(d) to Fig. 1(f), it is desired that the first pipe 1 is inserted into the enlarged pipe portion 2a from a position above the second pipe 2 when the pipes are joined. Therefore, when the inner diameter of the preform solder 3 is substantially equal to the outer diameter of the first pipe 1, the preform solder 3 is fixed at a predetermined position of the first pipe 1 due to friction between the preform solder 3 and the first pipe 1 when the preform solder 3 is fitted to the first pipe 1. As a result, the preform solder 3 does not slip off when the first pipe 1 is inserted into the second pipe 2, and the operation can be facilitated.

It is desired that the preform solder 3 is flux-cored solder. The flux may be applied to the end portion of the first pipe 1 in a case where the preform solder 3 is not flux-cored solder. In addition, when an amount of solder provided only by the preform solder 3 is not sufficient, the end portion of the first pipe 1 may be covered with preliminary solder.

(3) Step of inserting first pipe fitted with preform solder into enlarged pipe portion of second pipe and of bringing preform solder into contact with end surface of enlarged pipe portion

As shown in Fig. 1(d), when the first pipe 1 fitted with the preform solder 3 on the end portion is inserted into the enlarged pipe portion 2a, the preform solder 3 first contacts the end surface 2b of the enlarged pipe portion 2a. Further, when the first pipe 1 is inserted into the enlarged pipe portion 2a, only the first pipe 1 is inserted into the enlarged pipe portion 2a in a state where the preform solder 3 is in contact with the enlarged pipe portion 2a. As a result, as shown in Fig. 1(e), the end portion of the first pipe 1 contacts the diameter-reduced portion 2c of the enlarged pipe portion 2a.

When the inner diameter of the preform solder 3 is substantially equal to the outer diameter of the first pipe 1 as described above, the preform solder 3 in the state of Fig. 1(d) is fixed to the first pipe 1 without falling therefrom by friction between the preform solder 3 and the first pipe 1. In this case, after the preform solder 3 contacts the end surface 2b of the enlarged pipe portion 2a, the preform solder 3 is slid with the outer peripheral surface of the first pipe 1 and the first pipe 1 is inserted into the enlarged pipe portion 2a.

As shown in Fig. 1(e), in the joining method of pipes according to the present invention, the preform solder 3 is required to be in contact with the end surface 2b of the enlarged pipe portion 2a at the completion of inserting of the first pipe 1. When the preform solder 3 is not in contact with the end surface 2b, the molten solder may not flow into the gap between the enlarged pipe portion 2a and the first pipe 1, and joining failure may occur. In the present invention, the position of the preform solder 3 fitted to the first pipe 1 may be the end portion of the first pipe 1, or may be a position at which the preform solder 3 is in contact with the end surface 2b of the enlarged pipe portion 2a when the first pipe 1 contacts the diameter-reduced portion 2c of the enlarged pipe portion 2a.

(4) Heating preform solder

The solder flows into the gap between the enlarged pipe portion 2a and the first pipe 1 when the preform solder 3 is heated. The first pipe 1 and the second pipe 2 are joined as shown in Fig. 1(f), and the joint portion 4 is formed.

The preform solder 3 is heated by heating the pipes. Examples of heating of the pipes include: heating by a near-infrared lamp (NIR), and heating by a high-frequency induction method. The heating by the high-frequency induction method is preferred.

The high-frequency induction heating method is suitable for joining the pipes since the portion corresponding to a coil of a high-frequency induction heating device can be locally heated. A power supply of the high-frequency induction heating device can have a compact size without reducing workability since the melting point of the solder is about 300°C to 450°C. A large-scale cooling mechanism is not necessary to be provided at the coil of the high-frequency induction heating device since heating temperature may be about 300°C to 450°C based on the liquidus temperature.

The heating time is not particularly limited. However, the heating time may be about 1 to 10 minutes as long as the preform solder 3 is melted. Accordingly, cost reduction can be achieved due to the short heating time. As for a heating atmosphere, the heating is preferably carried out in atmosphere, from the viewpoint of workability. The heating temperature may be appropriately adjusted depending on a composition of the solder, and may be about 250°C to 450°C. The heating temperature may be controlled, for example, by using an infrared thermometer to adjust an output of the near-infrared lamp or the high-frequency induction heating device.

Examples

In order to verify the effect of the present invention, the effect was confirmed by the following alloy compositions. In the present example, a pipe was not used to join with a solder alloy but a plate was used to join with a solder alloy in order to observe a joint interface. The details are as follows.

The solder alloy having the alloy composition shown in Table 1 is molded into a preform solder of 5 mm $\times$ 5 mm $\times$ 1 mm, and the preform solder is placed on a Fe plate (carbon steel S50C for machine structure) and heated in the atmosphere of 450°C for three minutes to form a solder joint.

In the evaluation of "IMC growth prevention", the cross section was imaged at 3000 times in SEM after heating,

### EP 3 513 900 A1

and the thicknesses of the IMC layers at five points were measured. When the average thickness of the IMC layers at the specific five points was 4 μm or lower, it was evaluated as "O". When the average thickness of the IMC layers was more than 4 μm, it was evaluated as "X".

In the evaluation of "liquidus temperature", a DSC measurement was performed at a sample amount of about 30 mg and at a heating rate of about 15°C/min by using EXSTAR DSC 7020 manufactured by SII NanoTechnology Inc. When the liquidus temperature was 450°C or lower, it was evaluated as "○". When the liquidus temperature exceeded 450°C, it was evaluated as "X".

The case in which both IMC growth prevention evaluation and liquidus temperature evaluation are evaluated as good was evaluated as good in comprehensive evaluation.

The evaluated results are shown in Table 1.

Table 1

| | Alloy composition (mass %) | | | | | | IMC growth prevention | Liquidus temperature equal to or lower than 450°C | Comprehensive evaluation |
|---|---|---|---|---|---|---|---|---|---|
| | Sn | Sb | Cu | Ni | Co | Co/Ni | | | |
| Example 1 | Bal | 15.0 | 1.0 | 0.05 | 0.05 | 1.00 | ○ | ○ | ○ |
| Example 2 | Bal | 13.0 | 1.0 | 0.05 | 0.05 | 1.00 | ○ | ○ | ○ |
| Example 3 | Bal | 11.0 | 1.0 | 0.05 | 0.05 | 1.00 | ○ | ○ | ○ |
| Example 4 | Bal | 9.0 | 1.0 | 0.05 | 0.05 | 1.00 | ○ | ○ | ○ |
| Example 5 | Bal | 7.0 | 1.0 | 0.05 | 0.05 | 1.00 | ○ | ○ | ○ |
| Example 6 | Bal | 5.0 | 1.0 | 0.05 | 0.05 | 1.00 | ○ | ○ | ○ |
| Example 7 | Bal | 7.0 | 8.0 | 0.05 | 0.05 | 1.00 | ○ | ○ | ○ |
| Example 8 | Bal | 7.0 | 5.0 | 0.05 | 0.05 | 1.00 | ○ | ○ | ○ |
| Example 9 | Bal | 7.0 | 2.0 | 0.05 | 0.05 | 1.00 | ○ | ○ | ○ |
| Example 10 | Bal | 7.0 | 0.5 | 0.05 | 0.05 | 1.00 | ○ | ○ | ○ |
| Example 11 | Bal | 7.0 | 1.0 | 0.7 | 0.05 | 0.07 | ○ | ○ | ○ |
| Example 12 | Bal | 7.0 | 1.0 | 0.5 | 0.05 | 0.10 | ○ | ○ | ○ |
| Example 13 | Bal | 7.0 | 1.0 | 0.3 | 0.05 | 0.17 | ○ | ○ | ○ |
| Example 14 | Bal | 7.0 | 1.0 | 0.1 | 0.05 | 0.50 | ○ | ○ | ○ |
| Example 15 | Bal | 7.0 | 1.0 | 0.025 | 0.05 | 2.00 | ○ | ○ | ○ |
| Example 16 | Bal | 7.0 | 1.0 | 0.05 | 0.3 | 6.00 | ○ | ○ | ○ |
| Example 17 | Bal | 7.0 | 1.0 | 0.05 | 0.2 | 4.00 | ○ | ○ | ○ |
| Example 18 | Bal | 7.0 | 1.0 | 0.05 | 0.1 | 2.00 | ○ | ○ | ○ |
| Example 19 | Bal | 7.0 | 1.0 | 0.05 | 0.025 | 0.50 | ○ | ○ | ○ |
| Comparative Example 1 | Bal | 7.0 | 1.0 | <u>0.8</u> | <u>0.4</u> | 0.50 | ○ | × | × |
| Comparative Example 3 | Bal | 7.0 | 1.0 | <u>0</u> | <u>0</u> | - | × | ○ | × |
| Comparative Example 3 | Bal | 7.0 | 1.0 | 0.05 | <u>0</u> | 0.00 | × | ○ | × |
| *The underline represents deviating from the range of the present invention. | | | | | | | | | |

As shown in Table 1, in Examples 1 to 19, the heating temperature during joining can be set to 450°C or lower since the requirements of the present invention were satisfied in any of the alloy compositions. Therefore, growth of the IMC layer during joining was prevented. In addition, the solidus temperature is constant regardless of the composition, so that it is easy to control the solid phase amount and the liquid phase amount in a heating temperature range of the two phase coexisting region including the liquid phase and the solid phase, and a stronger joint portion can be formed. Therefore, it was found that the joint portion of the pipes joined by using the solder alloys in Examples 1 to 19 shows high reliability, and withstands long-time use even when the solder alloys are used for pipe joining for the cooling device. In addition, the similar results were obtained for a Cu plate in the case of using the solder alloys of Examples 1 to 19.

In contrast, it was found that low-temperature joining is difficult in Comparative Example 1 since the Ni content was large and liquidus temperature exceeded 450°C. It is considered that an IMC layer grows and reliability of a joint portion is not obtained in Comparative Example 2 since Ni and Co were not contained. It is considered that an IMC layer grows and reliability of a joint portion is not obtained in Comparative Example 3 sine Co was not contained. The results of Table 1 are further described in detail by using Fig. 4 and Fig. 5.

Fig. 4 is SEM photographs of cross sections of joint surfaces obtained by using the alloys in Comparative Example 3 and Example 5 to join with Fe plates under the heating condition of 450°C-three min. (being maintained at 450°C for three minutes). Fig. 4(a) is a SEM photograph showing the result of arbitrarily extracted two joint surfaces using Comparative Example 3 and measuring a film thickness of the IMC layer formed in each of cross sections at five points. Fig. 4(b) is a SEM photograph showing the result of arbitrarily extracted two joint surfaces using Comparative Example 5 and measuring a film thickness of the IMC layer formed in each of cross sections at five points.

As shown in Fig. 4(a), the average thickness of IMC layers of the joint surface using Comparative Example 3 was 4.88 $\mu$m, and as shown in Fig. 4(b), the average thickness of IMC layers of the joint surface using Example 5 was 2.84 $\mu$m. Therefore, it was found that the IMC layer in Comparative Example 3 containing no Co was also 1.7 times thicker than that in Example 5. This is presumably because a crystal nucleus of Co was not formed in Comparative Example 3 since Co was not contained, and the IMC layer becomes thick. The results similar to those in Example 5 and Comparative Example 3 were obtained in other Examples and Comparative Examples.

Fig. 5 is SEM photographs of cross sections of joint surfaces obtained by using the alloys in Comparative Example 3 and Example 5 to join with Fe plates under the heating conditions of 450°C-three min. and 450°C-ten min.. Fig. 5(a) is a SEM photograph showing a cross section of a joint surface obtained by using the alloy in Comparative Example 3 to join with a Fe plate under the heating condition of 450°C-three min. Fig. 5(b) is a SEM photograph showing a cross section of a joint surface obtained by using the alloy in Example 5 to join with a Fe plate under the heating condition of 450°C-three min. Fig. 5(c) is a SEM photograph showing a cross section of a joint surface obtained by using the alloy in Comparative Example 3 to join with a Fe plate under the heating condition of 450°C-ten min. Fig. 5(d) is a SEM photograph showing a cross section of a joint surface obtained by using the alloy in Example 5 to join with a Fe plate under the heating condition of 450°C-ten min. In the above descriptions, "450°C-three min" represents maintaining in atmosphere for three minutes at 50°C, and "450°C-ten min" represents maintaining in atmosphere for ten minutes at 450°C.

Comparing Fig. 5(a) with Fig. 5(b), it was found that the IMC layer in Example 5 is thinner than that in Comparative Example 3 and a structure thereof in Example 5 is also finer than that in Comparative Example 3. In addition, as is clear from Fig. 5(c) and Fig. 5(d), the growth of the IMC layer was prevented and the fine structure thereof was also maintained in Example 5, even when the heating time during joining became about three times longer. The results similar to those in Example 5 and Comparative Example 3 were obtained in other Examples and Comparative Examples.

As described above, the solder alloy of the present invention is suitable for low-temperature joining between a Cu pipe and the other Cu pipe and for low-temperature joining between a Cu pipe and a Fe pipe, and is particularly suitable for pipe joining of a cooling device mounted in recent white goods.

Description of Reference Numerals

1: First pipe
2: Second pipe
2a: Enlarged pipe portion
2b: End surface of enlarged pipe portion
2c: Diameter-reduced portion of enlarged pipe portion
2d: Flare-processed portion
3: Preform solder
3a: End surface of preform solder
4: Joint portion

**Claims**

1.  A solder alloy for joining a Cu pipe and/or a Fe pipe, the solder alloy having an alloy composition consisting of, in mass%: Sb: 5.0% to 15.0%; Cu: 0.5% to 8.0%; Ni: 0.025% to 0.7%; and Co: 0.025% to 0.3%, with the balance being Sn,
    wherein the alloy composition satisfies the following relationship (1):

    $$0.07 \le Co/Ni \le 6 \quad (1)$$

    wherein Co and Ni are respectively represent contents (mass%) of Co and Ni.

2.  The solder alloy for joining a Cu pipe and/or a Fe pipe according to claim 1, wherein the alloy composition further comprises, in mass%, Sb: 5.0% to 9.0%.

3.  The solder alloy for joining a Cu pipe and/or a Fe pipe according to claim 1 or 2, wherein the alloy composition further comprises, in mass%, Cu: 0.5% to 3.0%.

4.  The solder alloy for joining a Cu pipe and/or a Fe pipe according to any one of claims 1 to 3, wherein the alloy composition further comprises, in mass%, Ni: 0.025% to 0.1%.

5.  The solder alloy for joining a Cu pipe and/or a Fe pipe according to any one of claims 1 to 4, which has a liquidus temperature of 450°C or lower.

6.  A preform solder comprising the solder alloy for joining a Cu pipe and/or a Fe pipe according to any one of claims 1 to 5.

7.  A flux-cored solder comprising the solder alloy for joining a Cu pipe and/or a Fe pipe according to any one of claims 1 to 5.

8.  A solder joint comprising the solder alloy for joining a Cu pipe and/or a Fe pipe according to any one of claims 1 to 5.

FIG. 1

Fitting ↑    Contact ↓ Inserting

Heating

（a）    （b）    （c）    （d）    （e）    （f）

FIG. 2

（a）    （b）

FIG. 3

（a）    （b）

# FIG. 4

(a)                                          (b)

# FIG. 5

( a )                                          ( b )

( c )                                          ( d )

## INTERNATIONAL SEARCH REPORT

| International application No. |
| --- |
| PCT/JP2018/021812 |

**A. CLASSIFICATION OF SUBJECT MATTER**
Int.Cl. B23K35/26(2006.01)i, B23K35/14(2006.01)i, C22C13/00(2006.01)i, C22C13/02(2006.01)i

According to International Patent Classification (IPC) or to both national classification and IPC

**B. FIELDS SEARCHED**

Minimum documentation searched (classification system followed by classification symbols)
Int.Cl. B23K35/26, B23K35/14, C22C13/00, C22C13/02

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/152387 A1 (SENJU METAL INDUSTRY CO., LTD.) 08 October 2015 & US 2017/0014955 A1 & EP 3127652 A1 & EP 3278920 A1 & CN 106163732 A & CN 108311812 A | 1-8 |
| A | WO 2014/084242 A1 (NIHON SUPERIOR CO., LTD.) 05 June 2014 (Family: none) | 1-8 |
| A | WO 2016/052124 A1 (MURATA MANUFACTURING CO., LTD.) 07 April 2016 (Family: none) | 1-8 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 August 2018 (27.08.2018) | 04 September 2018 (04.09.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/021812 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2012/128356 A1 (SENJU METAL INDUSTRY CO., LTD.) 27 September 2012 & US 2014/0141273 A1 & WO 2012/127642 A1 & EP 2689885 A1 & TW 201343312 A & CN 103561903 A & KR 10-2014-0044801 A & TW 201706068 A & BR 112013024398 A2 | 1-8 |
| A | WO 2012/141331 A1 (NIHON SUPERIOR CO., LTD.) 18 October 2012 & US 2014/0037369 A1 & EP 2698225 A1 & CN 103476541 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6149974 A

- JP H0234295 A